# EUROPEAN PATENT SPECIFICATION

(11) **EP 2 984 142 B1**
(45) Date of publication and mention of the grant of the patent: **24.10.2018**
(21) Application number: 14782637.4
(22) Date of filing: 10.04.2014
(51) Int. Cl.: C09D 7/40, C09D 163/00

(54) **SOUR GAS RESISTANT COATING**
SAUERGASBESTÄNDIGE BESCHICHTUNG
REVÊTEMENT RÉSISTANT AU GAZ ACIDE

(30) Priority: 10.04.2013 US 201361810375 P
(43) Date of publication of application: 17.02.2016
(73) Proprietor: The Sherwin-Williams Company, Cleveland, OH 44115 (US)
(72) Inventor: DECKER, Owen, H., Smithville, MO 64089 (US); O'DELL, George, William, Lawson, MO 64062 (US); KIRBY, Kurt, A., Kansas City, MO 64117 (US); HE, Lingyun, Cary, NC 27519 (US)
(74) Representative: Vossius & Partner Patentanwälte Rechtsanwälte mbB
(86) International application number: PCT/US2014/033655
(87) International publication number: WO 2014/169125

(56) References cited:
- EP-A2- 0 723 819
- WO-A1-82/00651
- WO-A1-92/09664
- WO-A1-2013/091685
- JP-A- S61 162 564
- JP-A- 2000 063 561
- US-A- 3 928 211
- US-A1- 2009 137 054
- US-A1- 2009 277 625
- US-A1- 2009 277 625
- US-A1- 2011 189 381
- AMOSA M K ET AL: "SULPHIDE SCAVENGERS IN OIL AND GAS INDUSTRY - A REVIEW", INSIDE NAFTA (NORTH AMERICAN FREE TRADE AGREEMENT), US , vol. 61, no. 2 30 June 2010 (2010-06-30), pages 85-92, XP002668881, ISSN: 1075-5349 Retrieved from the Internet: URL:http://hrcak.srce.hr/file/75684

## Description

### BACKGROUND

Metal substrates, including steel substrates such as pipe, are prone to failure. The rate and extent of failure is determined by the nature of the substrate and the nature of the environment to which the substrate is exposed. During the transport of oil and gas, a corrosive medium is formed by a combination of various ingredients, and especially hydrogen sulfide (H₂S). This medium is commonly called sour crude oil or sour gas. In pipeline steel, sour crude oil and sour gas can cause failure, including hydrogen-induced stress cracking (HIC), without application of external stress, especially at the high temperatures and pressures commonly used in oil and gas transport.

Exotic alloys of nickel, tantalum and the like may be used as protective coatings for steel substrates, but tend to be prohibitively expensive. Protective organic coatings, including powder coatings, for example, may be applied to provide resistance to attack by H₂S. However, conventional organic coatings containing metal-containing compounds included to resist permeation of H₂S through the coating to the underlying metal are not known in the art.

From the foregoing, it will be appreciated that what is needed in the art is a coating composition that can be applied to steel vessels or pipes and can resist permeation by H₂S relative to conventional coatings.

### SUMMARY

The present invention describes coating compositions that provide improved resistance to permeation by hydrogen sulfide (H₂S). Methods of protecting a surface from H₂S attack using such compositions are also described. The subject-matter of the present invention is defined in claims 1-14 as attached.

In one embodiment, the coating composition described herein includes at least one epoxy-functional polymer, at least one metal-containing compound in an amount sufficient to react with H₂S to form a metal sulfide with low solubility, and a curing agent capable of reacting with the epoxy-functional polymer. When combined and applied to a steel substrate, such as a pipe or vessel, for example, the epoxy polymer, metal-containing compound, and the curing agent form a coating composition that resists permeation by H₂S to the surface on which the coating composition is applied.

In another embodiment, a method of protecting a steel substrate from H₂S attack is described herein, including the steps of providing a steel substrate, applying on the steel substrate a composition that includes at least one epoxy-functional polymer, at least one metal-containing compound present in an amount sufficient to react with H₂S to produce a metal sulfide with low solubility, and at least one curing agent capable of reacting with the epoxy-functional polymer. The method further includes the step of curing the composition to provide a coating resistant to H₂S permeation.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

The details of one or more embodiments of the invention are set forth in the accompanying drawings and the description below. Other features, objects, and advantages of the invention will be apparent from the description and drawings, and from the claims.

### SELECTED DEFINITIONS

Unless otherwise specified, the following terms as used herein have the meanings provided below.

As used herein, the term "alkyl group" means a saturated linear or branched hydrocarbon group including, for example, methyl, ethyl, isopropyl, t-butyl, octadecyl, amyl, 2-ethylhexyl, and the like. The term "aromatic group" refers to an aryl group (i.e., an arylene group), which refers to a closed aromatic ring or ring system such as phenylene, naphthylene, biphenylene, fluorenylene, and indenyl, as well as heteroarylene groups (i.e., a closed ring hydrocarbon in which one or more of the atoms in the ring is an element other than carbon (e.g., nitrogen, oxygen, sulfur, etc)). Suitable heteroaryl groups include furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridinyl, isoxazolyl, isothiazolyl, purinyl, quinazolinyl, pyrazinyl, 1-oxidopyridyl, pyridazinyl, triazinyl, tetrazinyl, oxadiazolyl, thiadiazolyl, and so on. When such groups are divalent, they are typically referred to as "heteroarylene" groups

### (e.g., furylene, pyridylene, etc.)

Substitution is anticipated on the organic groups of the compounds of the present invention. As used herein, the term "alkyl" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl" may include ether groups, haloalkyls, nitroalkyls, carboxyalkyls, hydroxyalkyls, sulfoalkyls, etc.

The term "sour gas" as used herein refers to a natural or other type of gas containing significant amounts of hydrogen sulfide (H₂S). Crude oil that contains H₂S is called sour crude oil, while gas that contains H₂S is called sour gas. The term "sour gas" as used herein refers to both sour crude oil and sour gas. Conventionally, sour gas is defined as gas that contains more than about 20 ppm of H₂S by volume.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (i.e., polymers of two or more different monomers).

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "an" additive can be interpreted to mean that the coating composition includes "one or more" additives.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 1 to 2, etc.).

### DETAILED DESCRIPTION

Embodiments of the invention described herein include compositions and methods including an epoxy resin, a metal-containing compound, and a curing agent, wherein the epoxy resin, the metal-containing compound, and the curing agent are combined to form a coating composition that provides resistance to H₂S permeation when applied on a steel substrate, such as a pipe or vessel, for example. The methods described herein include steps for providing an epoxy resin, a metal-containing compound, and a curing agent, combining these components to form a coating combination, and applying the combination to a substrate, preferably a steel pipe or vessel. The methods further include curing the powder coating composition to provide a coating resistant to permeation by H₂S. The composition described herein may be a powder coating composition or a liquid coating composition.

In an embodiment, the composition described herein is a curable composition, which may be a powder composition or a liquid composition. In an aspect, the composition includes a combination of ingredients, including preferably at least one polymeric binder. Suitable polymeric binders generally include a film forming resin. The binder may be selected from any resin or combination of resins that provides the desired film properties. Suitable examples of polymeric binders include thermoset and/or thermoplastic materials, and can be made with epoxy, polyester, polyurethane, polyamide, acrylic, polyvinylchloride, nylon, fluoropolymer, silicone, other resins, or combinations thereof.

In a preferred embodiment, the polymeric binder includes at least one epoxy-functional polymer or polyepoxide. Suitable polyepoxides preferably include at least two 1,2-epoxide groups per molecule. In an aspect, the epoxy equivalent weight is preferably from about 50 to about 1000, more preferably from about 100 to 250, most preferably, less than about 250, based on the total solids content of the polyepoxide. The polyepoxides may be aliphatic, alicyclic, aromatic or heterocyclic. In an aspect, the polyepoxides may include substituents such as, for example, halogen, hydroxyl group, ether groups, and the like. In a preferred aspect, the epoxy resins described herein have an average of greater than about one epoxy functional group per molecule, preferably greater than about 2.5 epoxy functional groups per molecule.

Suitable epoxy resin compositions or polyepoxides used in the composition and method described herein include without limitation, epoxy ethers formed by reaction of an epihalohydrin, such as epichlorohydrin, for example, with a polyphenol, typically and preferably in the presence of an alkali. Suitable polyphenols include, for example, catechol, hydroquinone, resorcinol, 4,4-dihydroxybenzophenone, 1,5-hydroxynaphthalene, and the like.

Suitable epoxy resin compositions or polyepoxides may also include ethers of polyhydric alcohols. These compounds may be derived from polyhydric alcohols such as, for example, ethylene glycol, propylene glycol, butylene glycol, 1,6-hexylene glycol, neopentyl glycol, diethylene glycol, glycerol, trimethylol propane, pentaerythritol, and the like. In an embodiment, the epoxy resin compositions or polyepoxides described herein are derived by oxidation of an ethylenically unsaturated alicyclic compound. Ethylenically unsaturated alicylic compounds are epoxidized by reaction with oxygen, perbenzoic acid, acid-aldehyde monoperacetate, peracetic acid, and the like. Polyepoxides produced by such reaction are known to those of skill in the art and include, without limitation, epoxy alicylic ethers and esters.

In an embodiment, the epoxy resin compositions or polyepoxides described herein include epoxy novolac resins, obtained by reaction of epihalohydrin with the condensation product of aldehyde and monohydric or polyhydric phenols. Examples include, without limitation, the reaction product of epichlorohydrin with condensation product of formaldehyde and various phenols, such as for example, phenol, cresol, xylenol, butylmethyl phenol, phenyl phenol, biphenol, naphthol, bisphenol A, bisphenol F, and the like.

In an embodiment, the composition described herein includes one or more epoxy resin compositions or polyepoxides. In an aspect, the epoxy resin composition or polyepoxide is present in an range of about 10 to 99 wt%, preferably about 20 to 95 wt%, more preferably about 30 to 85 wt%, based on the total weight of the composition.

Without limiting to theory, it is believed that varying the T_{g}, by varying the structure of the epoxy-functional polymer, for example, can provide coating compositions with different properties for use in different applications. Accordingly, in an embodiment, the epoxy-functional polymer described herein, prior to curing, preferably has T_{g} of above at least 35°C, more preferably above at least 45°C.

In an embodiment, the composition described herein includes a combination of ingredients, including preferably at least one or more metal-containing compounds. Suitable metal-containing compounds include, for example, compounds that can react with the H₂S in sour gas to produce metal sulfides of low solubility in water. Without limiting to theory, it is believed that the metal component will react with H₂S, resulting in the precipitation of metal sulfide, effectively preventing exposure of the substrate to H₂S, according to the following reaction:

MₓO_{y} + nH₂S → MₓS_{y} + nH₂O

Where the metal oxide has a color different than the metal sulfide, the formation of the metal sulfide can be easily observed by optical means. For example, if the metal-containing component is Fe(III) oxide, red in color, reaction with H₂S produces a black precipitate of iron sesquisulfide. In a section of pipe, the extent (or depth) to which the black sulfide has replaced the red oxide represents the extent of H₂S permeation into the pipe coating.

Accordingly, in an embodiment, the one or more metal-containing compounds described herein include, for example, compounds of bismuth, cadmium, cobalt, copper, iron, lead, manganese, mercury, nickel, silver, tin, zinc, and the like.

In a preferred embodiment, the composition described herein includes iron (Fe)-containing compounds, zinc (Zn)-containing compounds, or mixtures thereof. Suitable Fe-containing compounds include, for example, FeO, Fe₂O₃ (red iron oxide), Fe₂O₃.nH₂O (yellow iron oxide), FeCO₃, Fe₂(CO₃)₃, FeSO₄, Fe₂(SO₄)₃, Fe₃(PO₄)₂, FePO₄, Fe(OCOR)₂, Fe(OCOR)₃, where R is C1 to C20 alkyl or C6 to C20 aryl, and the like. Suitable Zn-containing compounds include, for example, ZnO, ZnCO₃, ZnSO₄, Zn₃(PO₄)₂, Zn(OCOR)₂, where R is C1 to C20 alkyl or C6 to C20 aryl, and the like. In a preferred aspect, the metal-containing compound is Fe₂O₃ (red iron oxide), Fe₂O₃.nH₂O (yellow iron oxide), ZnO, or a combination thereof, with Fe₂O₃ particularly preferred.

In an embodiment, the composition described herein includes one or more metal-containing compounds. In an aspect, the metal-containing compound is present in an amount sufficient to react with and precipitate substantially all the H₂S that permeates into the coating as a metal sulfide, thereby reducing permeation by H₂S. In an aspect, the metal sulfide has low solubility, i.e. a solubility product (Kₛₚ) of less than about 1x10⁻¹⁰. Without limiting to theory, it is believed that metal compound concentrations below about 5 wt% are insufficient to substantially reduce or prevent permeation. Accordingly, the composition described herein includes one or more metal-containing compounds in an amount greater than about 5 wt%, preferably about 5 wt% to 60 wt%, more preferably about 10 to 50 wt%, based on the total weight of the composition.

In an embodiment, the powder composition described herein is a curable composition that includes at least one curing agent. In an embodiment, the curing agent is described herein is capable of reacting with epoxy-functional polymers or resins to help achieve an epoxy-functional composition with a rapid cure time. In an aspect, where the coating composition described herein is a powder composition, the curing agent is selected to be compatible with the epoxy-functional resin or polymer and operate to cure the composition only when melted at the temperature intended to cure the powder composition.

Suitable curing agents include, for example, amine-functional compounds, phenol-functional compounds, phenol novolac compounds, imidazole-functional compounds, amino-functional compounds, and the like. Examples of amine-functional curing agents include, without limitation, dicyandiamide, 4,4'-diaminodiphenylsulfone, and the like. Examples of phenol-functional curing agents include, without limitation, bisphenol A, phenol-functional adducts of bisphenol A and epoxy compounds (commercially available as DEH 85, for example) 1,1,2,2-tetraphenolethane (commercially available as SD-357B), and the like. Examples of phenol novolac-type curing agents include, without limitation, cresol novolac curing agents (commercially available as ARADUR HT-9690 (Ciba Specialty Chemicals), SD-1621, SD-241A (Momentive), bisphenol A-derived novolac curing agents (commercially available as SD-1502 (Momentive), and the like. Examples of catalytic curing agents include, without limitation, N,N-dimethylamino pyridine, 2-methylimidazole, 2-(1-propyl)imidazole, 2-phenylimidazole , adducts of 2-methylimidazole with the diglycidyl ether of BPA (commercially available as Epicure P-101), and the like.

In a preferred embodiment, the one or more curing agents included in the composition described herein are imidazole-functional compounds, cresol novolac compounds, and combinations thereof. In an embodiment, the composition described herein includes one or more curing agents, preferably imidazole-functional compounds or cresol novolac compounds, such as, for example, Epicure P-101, Aradur 9690, or combinations thereof. In an aspect, the curing agent is present in a range of preferably about 0.5 to 35 wt%, more preferably about 1.5 to 25 wt%, based on the total weight of the powder composition.

In an embodiment, the method described herein includes combining one or more epoxy resin compositions with one or more metal-containing compounds, and one or more curing agents to form a coating composition. The coating composition described herein may be a liquid coating composition, or a powder coating composition. A liquid composition as described herein is prepared by formulating the epoxy-functional polymers, metal-containing compounds and curing agents in a liquid carrier. The liquid carrier may be water, organic solvent, or mixtures of various such liquid carriers. Accordingly, liquid coating compositions of the present invention may be either water-based or solvent-based systems. Examples of suitable organic solvents include glycol ethers, alcohols, aromatic or aliphatic hydrocarbons, dibasic esters, ketones, esters, and the like, and combinations thereof. Preferably, such carriers are selected to provide a dispersion or solution of the polymer for further formulation. The liquid composition may include other ingredients necessary for further formulation, including dispersing agents, wetting additives, surfactants, fillers, pigment, and the like, as known in the art. A liquid composition as described herein is applied by standard methods known in the art, such as for example, spraying, electrocoating, extrusion coating, laminating, powder coating, and the like.

In a preferred embodiment, the composition described herein is a high solids liquid composition or a powder composition. The powder composition is a fusible composition that melts on application of heat to form a coating film. The composition is typically prepared by combining the solid epoxy-functional polymer, metal-containing compound and curing agent by methods known in the art. For example, the components of the composition are mixed together in an appropriate vessel and extruded. The extrudate is then cooled and ground to a coating powder. The composition may also include other components typically included in powder coating compositions, such as other epoxy resins, fillers, flow aids, pigments, degassing aids, dry-flow additives, and the like, as known in the art. The powder is applied using methods known to those of skill in the art, such as, for example, electrostatic spray methods, fluid bed methods, and the like, followed by curing to a dry film thickness of about 200 to about 500 microns (about 8 to 20 mil), preferably 300 to 400 microns (about 12 to 15 mil).

In an embodiment, the present invention provides a method to protect steel pipelines and other steel vessels from sour gas, a corrosive medium formed by a combination of ingredients, and especially hydrogen sulfide (H₂S). In pipeline steel, sour gas may cause failure, including hydrogen-induced stress cracking, i.e. failure without application of external stress, especially at the high temperatures and pressures commonly used in oil and gas transport.

Accordingly, coatings with low permeability to H₂S are used to line oil and natural gas pipelines, i.e. large diameter pipe made from steel used as well drill pipe, production pipe, line pipe, and the like. To achieve resistance to attack by high levels of H₂S at high temperatures and pressures, pipe linings may be fabricated from exotic alloys such as nickel alloy (Inconel C-276), tantalum alloy, and the like. In less aggressive conditions, organic coatings, including liquid or powder coatings that demonstrate reduced permeability to H₂S may be used. Conventionally, such coatings have included epoxy-functional resins and standard curing agents. These coatings sometimes include low levels of metal-containing compounds, typically oxides of iron or zinc present as pigments in the coating formulations. However, these metal-containing compounds are not present in amounts sufficient to substantially reduce permeation by H₂S. Typically, metal-containing components are present below about 5 wt%, based on the total weight of the composition. Surprisingly, the coating composition described herein demonstrates significant reduction in H₂S permeability, with measured H₂S permeation of about 3 mil (approx. 75 micron) or less. In contrast, conventional coatings with less than 5 wt% metal-containing compound typically have H₂S permeation levels of 5 mil (approx. 125 micron) or more. Without limiting to theory, it is believed that increasing the metal-containing component to levels above about 10 wt% allows the H₂S in sour gas to be immobilized as a metal sulfide precipitate, thereby reducing material failure of oil and gas pipe by sour gas attack. Moreover, and without limiting to theory, it is believed that the high crosslink density of an epoxy-functional polymer crosslinked with an epoxy-specific curing agent also reduces H₂S permeation.

In an embodiment, the composition described herein is preferably applied to the surface of a substrate, preferably a metal substrate, more preferably a steel substrate, such as used in oil and gas pipeline, for example. The composition is applied using methods known to those of skill in the art. Prior to application of the coating composition, the substrate is typically and preferably degreased and grit blasted, preferably to a profile depth of about 50 to 70 microns.

In an embodiment, the methods described herein include applying a liquid or powder composition as described herein to a substrate, and curing the composition on the substrate. In an aspect, the composition is applied to a substrate by conventional methods known to those of skill in the art. Where the composition is a powder composition, the substrate is preheated to the application temperature, about 150°C to 180°C, for a given period of time. The powder composition is then applied to the heated substrate by methods known to those of skill in the art. The coated substrate is then baked to a temperature of about 200°C to 300°C for a given period of time to cure the coating.

Techniques for preparing liquid and powder compositions are known to those of skill in the art. The following examples are offered to aid in understanding of the present invention and are not to be construed as limiting the scope thereof. Unless otherwise indicated, all parts and percentages are by weight.

### In the following embodiments of the present application are summarized:

1. A coating composition, comprising
   at least one epoxy-functional polymer;
   at least one metal-containing compound present in an amount sufficient to react with H₂S to produce a metal sulfide having low solubility; and
   at least one curing agent,
   wherein the composition reduces H₂S permeation when applied to a steel pipe or vessel.
2. A coating composition comprising
   about 30 to 85 wt% of an epoxy functional polymer having a Tg of above 45°C;
   about 10 to 50 wt% of a metal-containing compound capable of reacting with H₂S to produce a metal sulfide having low solubility; and
   about 0.5 to 35 wt% of a curing agent capable of reacting with the epoxy-functional polymer,
   wherein the composition forms a coating resistant to H₂S permeation when applied to a steel pipe or vessel.
3. A method of protecting a steel substrate from H₂S permeation, the method comprising providing a steel substrate;
   applying on the steel substrate a coating composition including
   at least one epoxy-functional polymer
   at least one metal-containing compound present in an amount sufficient to react with H₂S to produce a metal sulfide having low solubility; and
   at least one curing agent capable of reacting with the epoxy-functional polymer; and
   curing the composition to form a coating resistant to H₂S permeation.
4. The composition or method of any of the above items, wherein the epoxy-functional polymer is glycidylated.
5. The composition or method of any of the above items, wherein the epoxy-functional polymer is selected from glycidylated novolac resins, glycidylated cresol novolac resins, glycidylated polyamines, or mixtures or combinations thereof.
6. The composition or method of any of the above items, wherein the metal-containing compound is selected from metal oxide, metal carbonate, metal sulfate, metal phosphate, metal carboxylate, or mixtures or combinations thereof.
7. The composition or method of any of the above items, wherein the metal-containing compound comprises one or more oxides or salts of Fe(II).
8. The composition or method of any of the above items, wherein the metal-containing compound comprises one or more oxides or salts of Fe(III).
9. The composition or method of any of the above items, wherein the metal-containing compound comprises one or more oxides or salts of Zn(II).
10. The composition or method of any of the above items, wherein the metal-containing compound is selected from FeO, Fe₂O₃, Fe₂O₃.nH₂O, FeCO₃, Fe₂(CO₃)₂, FeSO4, Fe₂(SO₄)₃, Fe₃(PO₄)₂, FePO₄, Fe(OCOR)₂, Fe(OCOR)₃, wherein R is C1-C20 alkyl or C6-C20 aryl, or mixtures or combinations thereof.
11. The composition or method of any of the above items, wherein the metal-containing compound is selected from ZnO, ZnCO₃, ZnSO₄, Zn₃(PO4)₂, Zn(OCOR)₂, wherein R is C1-C20 alkyl or C6-C20 aryl, or mixtures or combinations thereof.
12. The composition or method of any of the above items, wherein the metal-containing compound is Fe₂O₃.
13. The composition or method of any of the above items, wherein the metal-containing compound is selected from Fe₂O₃, Fe₂O₃.nH₂O, ZnO or combinations thereof.
14. The composition or method of any of the above items, wherein the metal-containing compound is present in an amount of at least 5 wt%, based on the total weight of the composition.
15. The composition or method of any of the above items, wherein the curing agent is selected from amine-functional compounds, phenol-functional compounds, cresol novolac-based compounds, bisphenol A-based compounds, catalytic curing agents, or combinations thereof.
16. The composition or method of any of the above items, wherein the curing agent is a catalytic curing agent selected from alkyl-substituted imidazole, aryl-substituted imidazole, aminopyridine compounds, adducts of imidazole and BPA-derived compounds, or combinations thereof.
17. The composition or method of any of the above items, wherein the curing agent comprises an adduct of 2-methylimidazole and a diglycidyl ether of bisphenol A.
18. The composition or method of any of the above items, further comprising one or more additional epoxy resins.
19. The composition or method of any of the above items, further comprising fillers, flow aids, pigments, degassing agents, dry-flow additives, or combination thereof.

### EXAMPLES

The invention is illustrated by the following examples. It is to be understood that the particular examples, materials, amounts, and procedures are to be interpreted broadly in accordance with the scope and spirit of the inventions as set forth herein. Unless otherwise indicated, all parts and percentages are by weight and all molecular weights are weight average molecular weight.

### TEST METHODS

Unless indicated otherwise, the following test methods were utilized in the Examples that follow.

### Hydrogen Sulfide Permeation Measurement

The sour gas resistance of the coating is determined by exposing test samples in a sour gas test cell to a three-phase test medium, as defined in Table 1.

**Table 1. Sour Gas Test Medium**

| | |
|---|---|
| Test duration | 168 hours |
| Test temperature (°F) | 200 |
| Test pressure (psig) | 5000 |
| Aqueous phase | Tap water |
| Hydrocarbon phase | 50:50 kerosene/toluene |
| Gas phase | 10% H₂S |
| | 5% CO₂ |
| | 85% methane |
| Decompression | 1 to 3 minutes |

Following exposure to the sour gas test medium, hydrogen sulfide permeation is measured by optical photomicroscopy. Each test bar, colored red prior to exposure, is cross-sectioned to expose the full depth of the coating. After exposure, a black surface layer (i.e. a layer containing iron sesquisulfide precipitate) indicates the zone of H₂S permeation, beyond which the original color of the cured coating (red) is seen. The depth of H₂S permeation is determined by measuring the thickness of the black iron-sesquisulfide layer using a light microscope at 70X magnification.

### Example 1: Permeation Resistance

Coating compositions were prepared as follows. A glycidylated cresol novolac resin was combined with yellow iron oxide and curing agents (specifically Aradur 9690 and Epicure P-101) and blended by shaking in a bag. The amount of each component was as shown in Table 2. The blend was then extruded using a Werner Pfleiderer ZSK-30 extruder. Extrudates were calendared and cooled by passing between chilled rollers. The resulting brittle solids were each combined with 0.2% dry flow agent and then ground to form a coating powder with average particle size of about 35 micron. The coating powders were then suspended on air in a fluid bed. Steel bars, preheated to 300°F, were dipped into the fluid bed to deposit a coating of approximately 400 to 500 micron thickness. The coatings were immediately cured by post-baking for 60 minutes at 500°F. Following the cure step, all coatings containing more than 0.2% iron oxide were rust-red in color. Each coating was then tested for H₂S permeation by exposing the coated steel bars to a sour gas test medium, and measuring the depth of H₂S permeation. Results are shown in Table 2, and demonstrate that the metal-containing component must be present at 10 wt% or higher in order to reduce H₂S permeation.

**Table 2. H₂S Permeation Resistance**

| **Component** | **Composition #1¹** | **Comp. #2** | **Comp. #2** | **Comp. #4** | **Comp. #5** | **Comp. #6** | **Comp. #7** |
|---|---|---|---|---|---|---|---|
| EPON 165 | 38.5² | 38.5 | 38.4 | 38.2 | 37.0 | 35.5 | 34.2 |
| Yellow iron oxide YZ1688 | **0.0** | **0.3** | **1.4** | **2.9** | **13.9** | **26.7** | **38.6** |
| Aradur 9690 | 22.6 | 22.6 | 22.5 | 22.5 | 21.7 | 20.9 | 38.6 |
| Epicure P101 | 0.1 | 0.1 | 0.1 | 0.1 | 0.1 | 0.1 | 0.1 |
| EPON 2002 | 6.8 | 6.8 | 6.8 | 6.8 | 6.5 | 6.3 | 6.0 |
| Nyad 365 | 30.8 | 30.5 | 29.6 | 28.5 | 19.7 | 9.5 | 0.0 |
| Resiflow PF67 | 1.1 | 1.1 | 1.1 | 1.1 | 1.0 | 1.0 | 1.0 |
| H₂S permeation (mil) | - ³ | 10.5 | 6.99 | 5.90 | 2.92 | 1.89 | 1.66 |

| | | | | | | | |
|---|---|---|---|---|---|---|---|
| ¹ Compositions 1-4 are conventional coating compositions, while compositions 5-7 are examples of the inventive composition. ² All amounts are expressed as weight percent, based on the total weight of the composition. ³ In the absence of iron oxide, H₂S permeation does not cause a color change in the coating, and therefore, permeation cannot be measured by the optical techniques described herein. | | | | | | | |

### Example 2: Effect of Zn-containing component on H₂S permeation

To determine the effect of ZnO on H₂S permeation, a coating composition was prepared according to the method of Example 1, but also including ZnO, with the components present in the amounts shown in Table 3. This composition was applied to test bars, cured and tested following exposure to sour gas. Results are shown in Table 3.

**Table 3. H₂S Permeation of coating with zinc oxide**

| **Material** | **Amount (wt%)** |
|---|---|
| EPON 165 | 32.6 |
| YZ-1688 | 2.5 |
| ZnO | 30.2 |
| Aradur 9690 | 19.2 |
| Epicure P101 | 0.1 |
| EPON 2002 | 5.8 |
| Nyad 325 | 8.7 |
| Resiflow PF67 | 0.9 |
| H₂S permeation (mil) | 3.23 |

The results in Table 3 suggest that zinc oxide may reduce H₂S permeation to levels below that expected for low levels of iron oxide.

### Example 4: Effect of different types of iron oxide on H₂S permeation

To determine the effect of different types of iron oxide on H₂S permeation, a coating composition was prepared according to Example 1, with red iron oxide instead of yellow iron oxide, and with the components present in the amounts shown in Table 4. This composition was applied to test bars, cured and tested following exposure to sour gas. Results are shown in Table 4.

**Table 4: H₂S permeation of coating with red iron oxide**

| **Material** | **Amount (wt%)** |
|---|---|
| EPON 165 | 33.6 |
| Red iron oxide R-2899 | 30.8 |
| Aradur 9690 | 19.7 |
| Epicure P-101 | 0.1 |
| EPON 2002 | 5.9 |
| Nyad 325 | 8.9 |
| Resiflow PF67 | 0.9 |
| H₂S permeation (mil) | 2.28 |

The results in Table 4 suggest that different types of iron oxide may be useful to reduce H₂S permeation.

### Example 5: Effect of curing agent

To determine the effect of different curing agents on H₂S permeation, a composition was prepared according to Example 1, but using different curing agents as shown in Table 5 and Table 6. The compositions were applied to test bars, cured and exposed to sour gas as described in Example 1. Results are shown in Table 5 and Table 6.

**Table 5: H₂S permeation of coating with different curing agents**

| **Material** | **Amount (wt%)** |
|---|---|
| EPON 165 | 57.3 |
| YZ-1688 | 27.8 |
| Dicyandiamide | 4.5 |
| (2-1-propyl)-imidazole | 0.1 |
| C-3000 Mica | 9.3 |
| Resiflow PF67 | 1.0 |
| H₂S permeation (mil) | 1.95 |

**Table 6: H₂S permeation of coating with different curing agents**

| **Material** | **Amount (wt%)** |
|---|---|
| EPON 165 | 34.8 |
| YZ-1688 | 24.7 |
| SD 357B (TPE) | 20.8 |
| 2-1-propyl)-imidazole | 0.1 |
| C-3000 Mica | 12.4 |
| Resiflow PF67 | 1.0 |
| H₂S permeation (mil) | 2.27 |

Results in Tables 5 and 6 suggest that different curing agents can be used in a coating to provide reduced H₂S permeation.

The complete disclosure of all patents, patent applications, and publications, and electronically available material cited herein are incorporated by reference. The foregoing detailed description and examples have been given for clarity of understanding only. No unnecessary limitations are to be understood therefrom. The invention is not limited to the exact details shown and described, for variations obvious to one skilled in the art will be included within the invention defined by the claims. The invention illustratively disclosed herein suitably may be practiced, in some embodiments, in the absence of any element which is not specifically disclosed herein.

## Claims

1. A coating composition, comprising
at least one epoxy-functional polymer;
at least one metal-containing compound present in an amount sufficient to react with H₂S to produce a metal sulfide having a solubility product (Kₛₚ) of less than 1x10⁻¹⁰; and
at least one curing agent,
wherein the composition reduces H₂S permeation when applied to a steel pipe or vessel.

2. The coating composition of claim 1 comprising
about 30 to 85 wt% of an epoxy functional polymer having a Tg of above 45°C;
about 10 to 50 wt% of a metal-containing compound capable of reacting with H₂S to produce a metal sulfide having low solubility; and
about 0.5 to 35 wt% of a curing agent capable of reacting with the epoxy-functional polymer,
wherein the composition forms a coating resistant to H₂S permeation when applied to a steel pipe or vessel.

3. A method of protecting a steel substrate from H₂S permeation, the method comprising providing a steel substrate;
applying on the steel substrate a coating composition including
at least one epoxy-functional polymer
at least one metal-containing compound present in an amount sufficient to react with H₂S to produce a metal sulfide having a solubility product (Kₛₚ) of less than 1x10⁻¹⁰; and
at least one curing agent capable of reacting with the epoxy-functional polymer; and
curing the composition to form a coating resistant to H₂S permeation.

4. The composition or method of any of the above claims, wherein the epoxy-functional polymer is glycidylated.

5. The composition or method of any of the above claims, wherein the epoxy-functional polymer is selected from glycidylated novolac resins, glycidylated cresol novolac resins, glycidylated polyamines, or mixtures or combinations thereof.

6. The composition or method of any of the above claims, wherein the metal-containing compound is selected from metal oxide, metal carbonate, metal sulfate, metal phosphate, metal carboxylate, or mixtures or combinations thereof.

7. The composition or method of any of the above claims, wherein the metal-containing compound comprises one or more oxides or salts of Fe(II), Fe(III), or Zn(II).

8. The composition or method of any of the above claims, wherein the metal-containing compound is selected from FeO, Fe₂O₃, Fe₂O₃.nH₂O, FeCO₃, Fe₂(CO₃)₂, FeSO4, Fe₂(SO₄)₃, Fe₃(PO₄)₂, FePO₄, Fe(OCOR)₂, Fe(OCOR)₃, wherein R is C1-C20 alkyl or C6-C20 aryl, or mixtures or combinations thereof.

9. The composition or method of any of the above claims, wherein the metal-containing compound is selected from Fe₂O₃, Fe₂O₃.nH₂O, ZnO or combinations thereof.

10. The composition or method of any of the above claims, wherein the curing agent is selected from amine-functional compounds, phenol-functional compounds, cresol novolac-based compounds, bisphenol A-based compounds, catalytic curing agents, or combinations thereof.

11. The composition or method of any of the above claims, wherein the curing agent is a catalytic curing agent selected from alkyl-substituted imidazole, aryl-substituted imidazole, aminopyridine compounds, adducts of imidazole and BPA-derived compounds, or combinations thereof.

12. The composition or method of any of the above claims, wherein the curing agent comprises an adduct of 2-methylimidazole and a diglycidyl ether of bisphenol A.

13. The composition or method of any of the above claims, further comprising one or more additional epoxy resins.

14. The composition or method of any of the above claims, further comprising fillers, flow aids, pigments, degassing agents, dry-flow additives, or combination thereof.

## Patentansprüche

1. Eine Beschichtungszusammensetzung, umfassend
mindestens ein epoxyfunktionelles Polymer;
mindestens eine metallhaltige Verbindung, die in einer Menge vorhanden ist, die ausreicht, um mit H₂S zu reagieren, um ein Metallsulfid mit einem Löslichkeitsprodukt (Kₛₚ) von weniger als 1×10⁻¹⁰ herzustellen; und
mindestens ein Härtungsmittel,
wobei die Zusammensetzung die H₂S-Durchlässigkeit reduziert, wenn diese auf ein Stahlrohr oder -behälter aufgebracht wird.

2. Die Beschichtungszusammensetzung gemäß Anspruch 1, umfassend
etwa 30 bis 85 Gew.-% eines epoxyfunktionellen Polymers mit einer Tg von über 45°C; etwa 10 bis 50 Gew.-% einer metallhaltigen Verbindung, die in der Lage ist mit H₂S zu reagieren, um ein Metallsulfid mit niedriger Löslichkeit herzustellen; und
etwa 0,5 bis 35 Gew.-% eines Härtungsmittels, das in der Lage ist mit dem epoxyfunktionellen Polymer zu reagieren,
wobei die Zusammensetzung eine Beschichtung bildet, die gegenüber H₂S-Durchlässigkeit beständig ist, wenn diese auf ein Stahlrohr oder -behälter aufgebracht wird.

3. Ein Verfahren zum Schützen eines Metallsubstrats vor H₂S-Durchlässigkeit, wobei das Verfahren umfasst
Bereitstellen eines Stahlsubstrats;
Aufbringen einer Beschichtungszusammensetzung auf das Stahlsubstrat, enthaltend mindestens ein epoxyfunktionelles Polymer
mindestens eine metallhaltige Verbindung, die in einer Menge vorhanden ist, die ausreicht, um mit H₂S zu reagieren, um ein Metallsulfid mit einem Löslichkeitsprodukt (Kₛₚ) von weniger als 1×10⁻¹⁰ herzustellen; und
mindestens ein Härtungsmittel, das in der Lage ist mit dem epoxyfunktionellen Polymer zu reagieren; und
Härten der Zusammensetzung, um eine Beschichtung zu bilden, die gegenüber H₂S-Durchlässigkeit beständig ist.

4. Die Zusammensetzung oder das Verfahren gemäß einem der vorstehenden Ansprüche, wobei das epoxyfunktionelle Polymer glycidyliert ist.

5. Die Zusammensetzung oder das Verfahren gemäß einem der vorstehenden Ansprüche, wobei das epoxyfunktionelle Polymer ausgewählt ist aus glycidylierten Novolak-Harzen, glycidylierten Kresol-Novolak-Harzen, glycidylierten Polyaminen oder Gemischen oder Kombinationen davon.

6. Die Zusammensetzung oder das Verfahren gemäß einem der vorstehenden Ansprüche, wobei die metallhaltige Verbindung ausgewählt ist aus Metalloxid, Metallcarbonat, Metallsulfat, Metallphosphat, Metallcarboxylat oder Gemischen oder Kombinationen davon.

7. Die Zusammensetzung oder das Verfahren gemäß einem der vorstehenden Ansprüche, wobei die metallhaltige Verbindung ein oder mehrere Oxide oder Salze von Fe(II), Fe(III) oder Zn(II) umfasst.

8. Die Zusammensetzung oder das Verfahren gemäß einem der vorstehenden Ansprüche, wobei die metallhaltige Verbindung ausgewählt ist aus FeO, Fe₂O₃, Fe₂O₃.nH₂O, FeCO₃, Fe₂(CO₃)₂, FeSO₄, Fe₂(SO₄)₃, Fe₃(PO₄)₂, FePO₄, Fe(OCOR)₂, Fe(OCOR)₃, wobei R für C1-C20-Alkyl oder C6-C20-Aryl steht, oder Gemische oder Kombinationen davon.

9. Die Zusammensetzung oder das Verfahren gemäß einem der vorstehenden Ansprüche, wobei die metallhaltige Verbindung ausgewählt ist aus Fe₂O₃, Fe₂O₃.nH₂O, ZnO oder Kombinationen davon.

10. Die Zusammensetzung oder das Verfahren gemäß einem der vorstehenden Ansprüche, wobei das Härtungsmittel ausgewählt ist aus aminfunktionellen Verbindungen, phenolfunktionellen Verbindungen, Verbindungen auf Kresol-Novolak-Basis, Verbindungen auf Bisphenol A-Basis, katalytischen Härtungsmitteln oder Kombinationen davon.

11. Die Zusammensetzung oder das Verfahren gemäß einem der vorstehenden Ansprüche, wobei das Härtungsmittel ein katalytisches Härtungsmittel ist, ausgewählt aus alkylsubstituiertem Imidazol, arylsubstituiertem Imidazol, Aminopyridinverbindungen, Addukten aus Imidazol und von BPA abgeleiteten Verbindungen oder Kombinationen davon.

12. Die Zusammensetzung oder das Verfahren gemäß einem der vorstehenden Ansprüche, wobei das Härtungsmittel ein Addukt aus 2-Methylimidazol und einem Diglycidylether von Bisphenol A umfasst.

13. Die Zusammensetzung oder das Verfahren gemäß einem der vorstehenden Ansprüche, ferner umfassend ein oder mehrere zusätzliche Epoxyharze.

14. Die Zusammensetzung oder das Verfahren gemäß einem der vorstehenden Ansprüche, ferner umfassend Füllmittel, Fließmittel, Pigmente, Entgasungsmittel, Trockenfließzusatzstoffe oder Kombinationen davon.

## Revendications

1. Composition de revêtement, comprenant
au moins un polymère à fonction époxy ;
au moins un composé contenant un métal présent en une quantité suffisante pour réagir avec H₂S et produire un sulfure métallique ayant un produit de solubilité (Kₛₚ) inférieur à 1 x 10⁻¹⁰ ; et
au moins un agent durcisseur,
dans laquelle la composition réduit la perméation de H₂S quand elle est appliquée à une canalisation ou à un récipient en acier.

2. Composition de revêtement selon la revendication 1 comprenant
d'environ 30 à 85 % en poids d'un polymère à fonction époxy ayant une Tg supérieure à 45 °C ;
d'environ 10 à 50 % en poids d'un composé contenant un métal capable de réagir avec H₂S pour produire un sulfure métallique ayant une faible solubilité ; et
d'environ 0,5 à 35 % en poids d'un agent durcisseur capable de réagir avec le polymère à fonction époxy,
dans laquelle la composition forme un revêtement résistant à la perméation de H₂S quand elle est appliquée à une canalisation ou à un récipient en acier.

3. Méthode de protection d'un substrat en acier contre la perméation de H₂S, la méthode comprenant :
la fourniture d'un substrat en acier ;
l'application sur le substrat en acier d'une composition de revêtement contenant
au moins un polymère à fonction époxy
au moins un composé contenant un métal présent en une quantité suffisante pour réagir avec H₂S et produire un sulfure métallique ayant un produit de solubilité (Kₛₚ) inférieur à 1 x 10⁻¹⁰ ; et
au moins un agent durcisseur capable de réagir avec le polymère à fonction époxy ; et
le durcissement de la composition pour former un revêtement résistant à la perméation de H₂S.

4. Composition ou méthode selon l'une quelconque des revendications ci-dessus, dans laquelle le polymère à fonction époxy est glycidylé.

5. Composition ou méthode selon l'une quelconque des revendications ci-dessus, dans laquelle le polymère à fonction époxy est choisi parmi les résines novolac glycidylées, les résines crésol novolac glycidylées, les polyamines glycidylées, ou leurs mélanges ou combinaisons.

6. Composition ou méthode selon l'une quelconque des revendications ci-dessus, dans laquelle le composé contenant un métal est choisi parmi un oxyde métallique, un carbonate métallique, un sulfate métallique, un phosphate métallique, un carboxylate métallique, ou leurs mélanges ou combinaisons.

7. Composition ou méthode selon l'une quelconque des revendications ci-dessus, dans laquelle le composé contenant un métal comprend un ou plusieurs oxydes ou sels de Fe(II), Fe(III), ou Zn(II).

8. Composition ou méthode selon l'une quelconque des revendications ci-dessus, dans laquelle le composé contenant un métal est choisi parmi FeO, Fe₂O₃, Fe₂O₃.nH₂O, FeCO₃, Fe₂(CO₃)₂, FeSO₄, Fe₂(SO₄)₃, Fe₃(PO₄)₂, FePO₄, Fe(OCOR)₂, Fe(OCOR)₃, où R est un alkyle en C1-C20 ou un aryle en C6-C20, ou leurs mélanges ou combinaisons.

9. Composition ou méthode selon l'une quelconque des revendications ci-dessus, dans laquelle le composé contenant un métal est choisi parmi Fe₂O₃, Fe₂O₃.nH₂O, ZnO ou leurs combinaisons.

10. Composition ou méthode selon l'une quelconque des revendications ci-dessus, dans laquelle l'agent durcisseur est choisi parmi les composés à fonction aminé, les composés à fonction phénol, les composés à base de crésol novolac, les composés à base de bisphénol A, les agents durcisseurs catalytiques, ou leurs combinaisons.

11. Composition ou méthode selon l'une quelconque des revendications ci-dessus, dans laquelle l'agent durcisseur est un agent durcisseur catalytique choisi parmi un imidazole substitué par un alkyle, un imidazole substitué par un aryle, les composés d'aminopyridine, les adduits d'imidazole et de composés dérivés de BPA, ou leurs combinaisons.

12. Composition ou méthode selon l'une quelconque des revendications ci-dessus, dans laquelle l'agent durcisseur comprend un adduit de 2-méthylimidazole et d'éther diglycidylique de bisphénol A.

13. Composition ou méthode selon l'une quelconque des revendications ci-dessus, comprenant en outre une ou plusieurs résines époxy supplémentaires.

14. Composition ou méthode selon l'une quelconque des revendications ci-dessus, comprenant en outre des charges, des auxiliaires d'écoulement, des pigments, des agents de dégazage, des additifs d'écoulement à sec, ou leurs combinaisons.
